# EUROPEAN PATENT SPECIFICATION

(11) **EP 3 566 945 B1**
(45) Date of publication and mention of the grant of the patent: **09.02.2022**
(21) Application number: 19161620.0
(22) Date of filing: 08.03.2019
(51) Int. Cl.: B64C 27/00

(54) **MULTIPLE DEGREE OF FREEDOM VIBRATION SUPPRESSION SYSTEM FOR CONTROLLING VIBRATIONS INDUCED BY A MAIN ROTOR WAKE ON TAILS SURFACES OF A ROTARY WING AIRCRAFT**
SCHWINGUNGSUNTERDRÜCKUNGSSYSTEM MIT MEHREREN FREIHEITSGRADEN ZUR STEUERUNG VON DURCH EINEN HAUPTROTORWIRBELSTRÖMUNG INDUZIERTEN SCHWINGUNGEN AUF HECKFLÄCHEN EINES DREHFLÜGELFLUGZEUGS
SYSTÈME DE SUPPRESSION DES VIBRATIONS À MULTIPLES DEGRÉS DE LIBERTÉ POUR CONTRÔLER LES VIBRATIONS INDUITES PAR LE SILLAGE D'UN ROTOR PRINCIPAL SUR LES SURFACES DE QUEUE D'UN AÉRONEF À VOILURE TOURNANTE

(30) Priority: 11.05.2018 US 201815977821
(43) Date of publication of application: 13.11.2019
(73) Proprietor: Sikorsky Aircraft Corporation, Stratford, CT 06615 (US)
(72) Inventor: MONICO, Michael Robert, Hamden, CT Connecticut 06514 (US); WELSH, William A., North Haven, CT Connecticut 06473 (US)
(74) Representative: Schmitt-Nilson Schraud Waibel Wohlfrom Patentanwälte Partnerschaft mbB

(56) References cited:
- US-A- 4 819 182
- US-A1- 2011 027 081
- US-A1- 2015 097 074
- US-A1- 2015 105 970

## Description

This invention was made with government support under Agreement No. W911W6-12-2-0005 awarded by the Army. The Government has certain rights in the invention.

The subject matter disclosed herein generally relates to the art of air vehicles and, more particularly, to a rotary wing aircraft with a multiple degree of freedom vibration suppression system for controlling vibrations induced by a main rotor wake on tail surfaces of the rotary wing aircraft.

US 2011/027081 A1 discloses a rotary wing aircraft including a vehicle vibration control system which includes a rotating hub mounted vibration control system, the rotating hub mounted vibration control system mounted to the rotating rotary wing hub with the rotating hub mounted vibration control system rotating with the rotating rotary wing hub driven to rotate about a rotating hub center Z axis by a gear box transmission. A first nonrotating body vibration sensor outputs first nonrotating body vibration sensor data correlating to vibrations. A distributed force generation data communications network link is linking together nonrotating body circular force generators and the rotating hub mounted vibration control system, wherein the rotating hub mounted vibration control system and the nonrotating body circular force generators are controlled to produce rotating forces wherein the vibration sensed by the at least first nonrotating body vibration sensor is reduced.

US 2015/097074 A1 discloses a system for active vibration control which includes an actuator configured to reduce the impact of a vibratory load imposed on an airframe of a rotorcraft to an amount that is less than a threshold, and a controller configured to determine the vibratory load based on the data, and set an eccentric rotational speed of an actuator at a first frequency and modulate the eccentric rotational speed by a second frequency based on the vibratory load.

US 2015/105970 A1 discloses a controller, including a processor, which sets an initial vibration frequency to be applied to an airframe. The controller commands one or more force generators to apply a vibratory load to the airframe at the initial vibration frequency. The controller determines a vibration response of the airframe at the initial vibration frequency using sensors. The controller sweeps through a range of vibration frequencies to be applied to the airframe. The one or more force generators are commanded to apply a plurality of vibratory loads to the airframe over the range of vibration frequencies.

US 4 819 182 A relates to a method and apparatus for reducing vibration of a helicopter fuselage. The apparatus comprises a plurality of actuators interconnecting parts of the helicopter structure capable of relative motion at an exciting frequency, means to continuously oscillate the actuators at a frequency corresponding to the exciting frequency, a plurality of accelerometers attached to the fuselage for generating signals representative of fuselage dynamic accelerations, and processing means for processing said signals and providing output signals for controlling the phase and magnitude of operation of the actuators.

Vibration systems for current production rotorcraft (e.g., helicopters) do not nullify vibration produced by wakes passing from a rotor blade onto aircraft surfaces. Most vibratory loads enter an airframe of the rotorcraft through a main rotor system. Forces and moments produced by rotor blades, gearbox, transmission housing and the like directly enter into the airframe. Additional vibratory loads enter the airframe indirectly. For example, rotor wake may induce vibratory loads on a tail section of the rotorcraft due to aerodynamic effects. Placing active vibration actuators at or near a main gear box or other surface near cabin spaces does not address vibrations that may be produced more remotely from the rotor system itself. As a consequence, there is a need to find a way to mount effective vibration suppression actuators that will address vibratory loads produced by the aerodynamic effects.

The invention relates to an aircraft with a vibration suppression system according to the appended claims. Embodiments are disclosed in the dependent claims.

In particular, the vibration suppression system of the aircraft having an airframe, a fuselage, a main gear box, a rotor, a hub, a rotor head, and an extending tail including a vertical stabilizer and a stabilator as claimed, includes one or more active vibration control actuators (AVC) mounted in the extending tail within a vibration affected zone. The vibration affected zone being between about 0% to about 20% of a length of the extending tail measured from a trailing edge of the vertical stabilizer.

In further embodiments the vibration affected zone is within about 0% to about 15% of the length of the extending tail measured from the trailing edge of the vertical stabilizer.

In further embodiments the rotorcraft includes a wheel mounted to the extending tail, the vibration affected zone extending from the trailing edge to substantially vertically above the wheel.

In further embodiments a first one of the one or more active vibration control actuators is mounted to a first side of the extending tail vertically above the wheel and a second one of the one or more active vibration control actuators is mounted to a second, opposing side of the extending tail vertically above the wheel.

In further embodiments at least one of the one or more AVC actuators is mounted to one of the vertical stabilizer and the stabilator.

In further embodiments a hub mounted vibration suppressor (HMVS) is mounted on the rotor head to reduce in-plane loads that the rotor exerts on the hub.

In further embodiments the HMVS includes a plurality of hub actuators.

In further embodiments the aircraft further comprises a plurality of sensors for providing feedback to the plurality of hub actuators and the one or more active vibration control actuators.

In further embodiments each of the plurality of sensors are mounted in a fuselage of the airframe.

In further embodiments each of the plurality of sensors are accelerometers.

In further embodiments the HMVS includes HMVS sensors operationally independent of the plurality of sensors.

In further embodiments the aircraft further comprises a controller providing coordinated control information to both the HMVS and the one or more AVC actuators to reduce vibration.

In further embodiments the HMVS includes an HMVS controller operational independent of the controller.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting, the scope of protection being solely defined by the appended claims.

### Description of the figures

FIG. 1 depicts a side view of a rotary wing aircraft including an n/rev vibration reduction system, in accordance with an aspect of an exemplary embodiment;
FIG. 2 depicts a top view of the rotary wing aircraft of FIG. 1;
FIG. 3 depicts a block diagram illustrating an n/rev vibration reduction system, in accordance with an aspect of an exemplary embodiment;
FIG. 4 depicts a chart comparing n/rev vibrations before adding tail actuators;
FIG. 5 depicts a chart illustrating a reduction/ substantial elimination of tail vibrations as a result of n/rev vibration reduction system, in accordance with an aspect of an exemplary embodiment;
FIG. 6 depicts a side view of a rotary wing aircraft illustrating alternative positioning of active vibration control actuators of an n/rev vibration reduction system, in accordance with another aspect of an exemplary embodiment; and
FIG. 7 depicts a top view of the rotary wing aircraft of FIG. 6

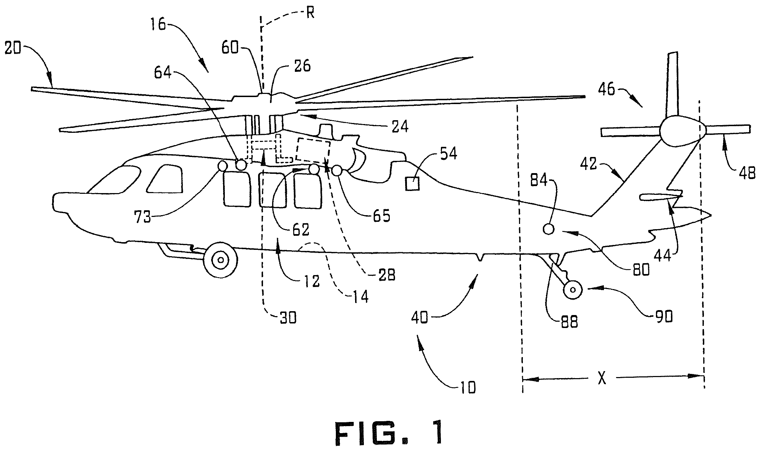

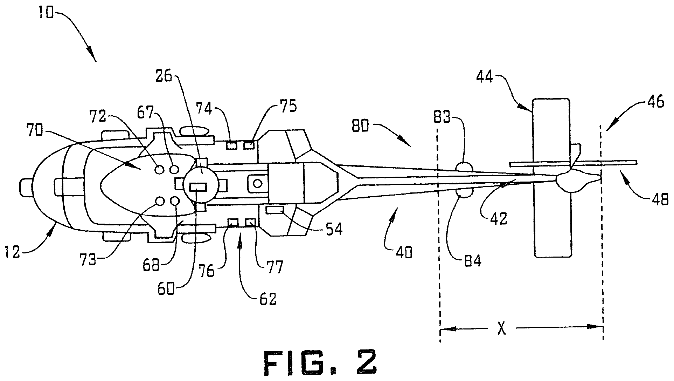

A vertical takeoff and landing (VTOL) or rotary wing aircraft, in accordance with an exemplary embodiment, is generally indicated at 10 in FIGS. 1 and 2. Rotary wing aircraft 10 including a fuselage 12 supported by an airframe 14. Rotary wing aircraft 10 includes a main rotor system 16, which rotates about a main rotor axis R. Main rotor system 16 includes a plurality of rotor blades 20 rotatable about a main rotor axis "R". Plurality of rotor blades 20 is mounted to a rotor hub 24 having a rotor head 26. Main rotor system 16 is driven by a gearbox 28 coupled to one or more prime movers, indicated generally at 30.

Rotary wing aircraft 10 includes an extending tail 40 that supports a vertical stabilizer 42 and a horizontal stabilizer or stabilator 44. Extending tail 40 starts roughly aft of a cabin portion (not separately labeled) of aircraft 10 where fuselage 12 begins to narrow. A tail rotor system 46 including a plurality of tail rotor blades, indicated generally at 48 is mounted to vertical stabilizer 42. Tail rotor system 46 may be operatively coupled to gearbox 28 through a drive shaft (not shown). In an embodiment, rotary wing aircraft 10 includes an n/rev vibration reduction system 54 that operates to reduce vibrations that may be introduced into fuselage 12 and/or airframe 14 through operation of main rotor system 16.

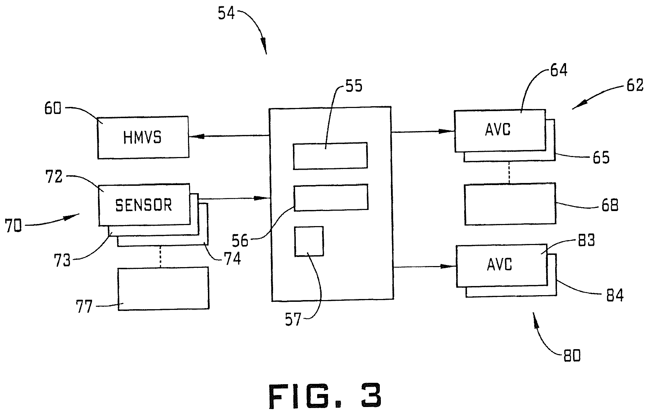

In accordance with an exemplary aspect depicted in FIG. 3, n/rev vibration reduction system 54 includes a controller or CPU 55 operatively connected to a non-volatile memory 56 and an actuator control module 57. It should be understood that while shown co-arranged at n/rev vibration reduction system 54, CPU 55, non-volatile memory 56 and actuator control module 57 may be located at different portions of rotary wing aircraft 10.

In an embodiment, a hub mounted vibration suppressor (HMVS) system 60 is mounted to rotor head 26 and operatively connected to n/rev vibration reduction system 54. N/rev vibration reduction system 54 is also operatively connected to a first plurality of active vibration control (AVC) actuators 62 that may include a first AVC actuator 64, a second AVC actuator 65, third and fourth actuators not shown) arranged on an opposing side of rotary wing aircraft 10, a fifth AVC actuator 67, and a sixth AVC actuator 68 that may be mounted to airframe 14 at various locations about fuselage 12.

For example, four of the plurality of AVC actuators 62 (e.g., first-fourth AVC actuators) may be arranged proximate to gearbox 28 on a gearbox mount (not shown), and fifth and sixth AVC actuators 67 and 68 may be arranged near the gearbox mount in an overhead of rotary wing aircraft 10 thereby addressing all six degrees of freedom (Fₓ, F_{y}, F_{z} and Mₓ, M_{y} and M_{z}) of gearbox 28. N/rev vibration reduction system 54 is also operatively coupled to a plurality of sensors 70 that may include a first sensor 72, a second sensor 73, a third sensor 74, a fourth sensor 75, a fifth sensor 76, and a sixth sensor 77 that may be mounted to airframe 14 at various locations about fuselage 12 provide six degree of freedom vibration information to n/rev vibration reduction system 54. It should be understood that the number and position of the sensors may vary.

In further accordance with an exemplary embodiment, rotary wing aircraft 10 includes a second plurality of AVC actuators 80 arranged on the extending tail 40. In an exemplary aspect, second plurality of AVC actuators 80 includes a first AVC actuator 83 and a second AVC actuator 84 mounted to opposing sides of extending tail 40 in a vibration affected zone "X". Vibration affected zone "X" extends from about an upper edge (not separately labeled) of a trailing edge (also not separately labeled) of vertical stabilizer 42 forward a distance of about 0% to about 20% of a length of extending tail 40.. In an exemplary aspect, first AVC actuator 83 and second AVC actuator 84 are mounted to opposing sides of extending tail 40 within about 15% of this distance. As shown, , first and second AVC actuators 83, 84 may be mounted to opposing sides of extending tail 40 substantially vertically above a support 88 for a tail wheel 90.

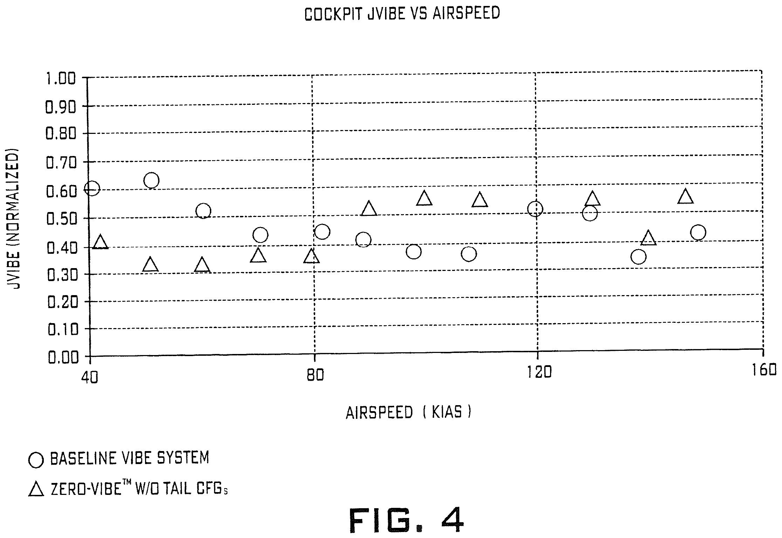

In operation, n/rev vibration reduction system 54 operates HMVS 60 to reduce and/or substantially attenuate large vibration loads, such as in-plane loads that rotor blades 20 exerts on the rotor hub 24. For example, HMVS 60 may account for two of the multiple degrees of freedom. N/rev vibration reduction system 54 also eliminates and/or substantially reduces multiple degrees of freedom caused by vibrations transmitted through gearbox 28 and by wake produced by rotor blades 20 impacting surfaces of extending tail 40. Test data, which depict n/rev vibrations before an implementation of tail vibration reduction is depicted in FIG. 4.

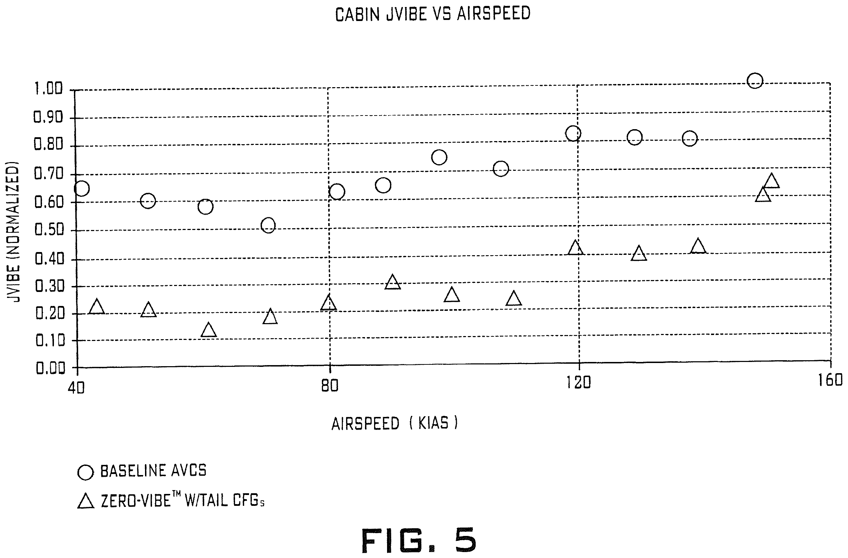

Once n/rev vibration reduction system 54 is active, vibration reduction is achieved such as shown in FIG. 5. As shown, the use of the vibration reduction system 54 on the extending tail 40 reduces the Jvibe to levels below a baseline bifilar and active vibration control system (AVCS) for all knots indicated airspeeds (KIAS), whereas a zero vibration system without the vibration reduction system 54 engaged matches or is out performed by the baseline bifilar and AVCS starting at roughly 60 KIAS.

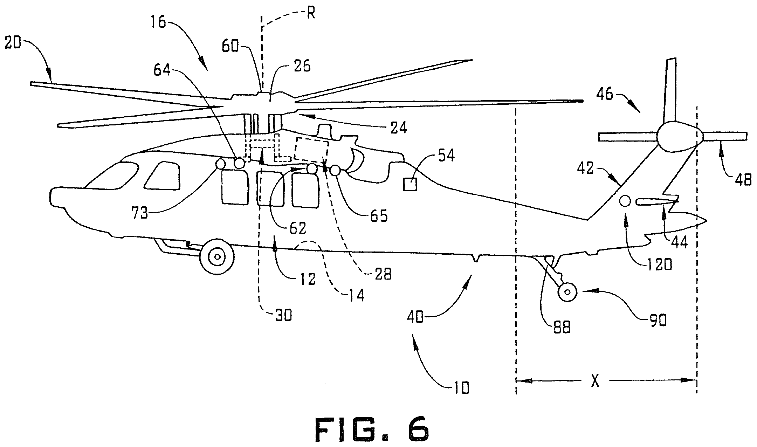

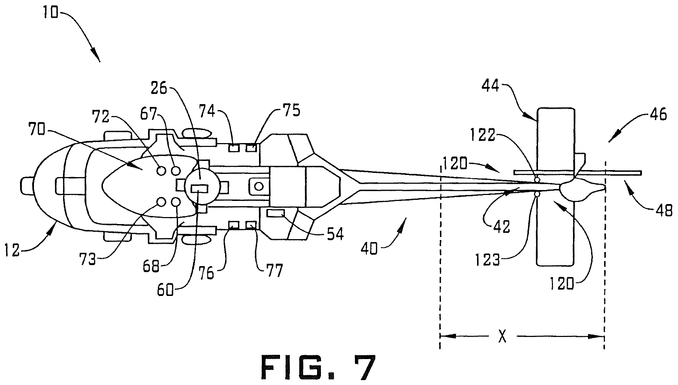

It should be understood that AVC actuators may be located at other positions on extending tail 40 within vibration affected zone "X" depending on rotor wake effects. For example, a second plurality of AVC actuators 120 including a first AVC actuator 122 and a second AVC actuator 123 may be mounted to opposing sides of extending tail 40 directly at vertical stabilizer 42 and/or stabilator 44 such as shown in FIG. 6 and FIG. 7, wherein like reference numbers represent corresponding parts in the respective views.

The terms "about" and "substantially" are intended to include the degree of error associated with measurement of the particular quantity based upon the equipment available at the time of filing the application. For example, "about" and/or "substantially" can include a range of ± 8% or 5%, or 2% of a given value.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An aircraft (10) comprising:
an airframe (14);
a fuselage (12) supported by the airframe (14);
a main gear box (28);
a rotor (16) including a hub (24) and a rotor head (26);
an extending tail (40) which starts aft of a cabin portion of the aircraft (10) where the fuselage (12) begins to narrow and includes a vertical stabilizer (42) and a stabilator (44); and
a vibration suppression system (54) **characterized by**:
one or more active vibration control, AVC, actuators (80, 120) mounted in the extending tail (40) within a vibration affected zone (X), the vibration affected zone being between about 0% to about 20% of a length of the extending tail (40) measured from a trailing edge of the vertical stabilizer (42) in forward direction, wherein the vibration suppression system (54) is operatively connected to the one or more AVC actuators (80, 120) and configured to be operated to reduce vibratory loads induced by rotor blade produced wake due to aerodynamic effects and impacting surfaces of the extending tail (40).

2. The aircraft according to claim 1, wherein the vibration affected zone (X) is within about 0% to about 15% of the length of the extending tail (40) measured from the trailing edge of the vertical stabilizer (42).

3. The aircraft of claim 1 or 2, wherein the aircraft (10) includes a wheel (90) mounted to the extending tail (40) and wherein the vibration affected zone (X) extends from the trailing edge to substantially vertically above the wheel (90).

4. The aircraft according to claim 3, wherein a first one of the one or more active vibration control actuators (83, 122) is mounted to a first side of the extending tail (40) vertically above the wheel (90) and a second one of the one or more active vibration control actuators (84, 123) is mounted to a second, opposing side of the extending tail (40) vertically above the wheel (90).

5. The aircraft according to one of claims 1 to 4, wherein at least one of the one or more AVC actuators (80, 120) is mounted to one of the vertical stabilizer (42) and the stabilator (44).

6. The aircraft of one of claims 1 to 5, further comprising: a hub mounted vibration suppressor, HMVS, (60) mounted on the rotor head (26) to reduce in-plane loads that the rotor exerts on the hub.

7. The aircraft of claim 6, wherein the HMVS (60) includes a plurality of hub actuators.

8. The aircraft of claim 7, further comprising: a plurality of sensors (70) for providing feedback to the plurality of hub actuators and the one or more active vibration control actuators (80).

9. The aircraft of claim 8, wherein each of the plurality of sensors (70) are mounted in a fuselage (12) of the airframe (14).

10. The aircraft of claim 8 or 9, wherein each of the plurality of sensors (70) are accelerometers.

11. The aircraft of one of claims 8 to 10, wherein the HMVS (60) includes HMVS sensors operationally independent of the plurality of sensors (70).

12. The aircraft of one of claims 6 to 11, further comprising:
a controller providing coordinated control information to both the HMVS (60) and the one or more AVC actuators (80) to reduce vibration.

13. The aircraft of claim 12, wherein the HMVS (60) includes an HMVS controller operational independent of the controller.

## Patentansprüche

1. Luftfahrzeug (10), das Folgendes umfasst:
eine Luftfahrzeugzelle (14);
einen Luftfahrzeugrumpf (12), der durch die Luftfahrzeugzelle (14) getragen wird;
ein Hauptgetriebe (28);
einen Rotor (16), der eine Nabe (24) und einen Rotorkopf (26) beinhaltet;
ein verlängertes Heckteil (40), das hinter einem Kabinenabschnitt des Luftfahrzeugs (10) beginnt, wo der Luftfahrzeugrumpf (12) beginnt, sich zu verengen, und einen vertikalen Stabilisator (42) und einen Stabilator (44) beinhaltet; und
ein Schwingungsunterdrückungssystem (54), das durch Folgendes gekennzeichnet ist:
einen oder mehrere Aktoren (80, 120) einer aktiven Schwingungssteuerung (AVC - Active Vibration Control), die in dem verlängerten Heckteil (40) innerhalb einer durch Schwingung beeinträchtigen Zone (X) montiert sind, wobei die durch Schwingung beeinträchtige Zone zwischen ungefähr 0 % und ungefähr 20 % einer Länge des verlängerten Heckteils (40) beträgt, gemessen von einer Abströmkante des vertikalen Stabilisators (42) in einer Vorwärtsrichtung, wobei das Schwingungsunterdrückungssystem (54) mit dem einen oder den mehreren AVC-Aktoren (80, 120) wirkverbunden und dazu konfiguriert ist, betrieben zu werden, um Schwingungsbelastungen zu reduzieren, die durch eine von dem Rotorblatt erzeugte Wirbelströmung aufgrund von aerodynamischen Effekten induziert sind und Flächen des verlängerten Heckteils (40) beeinflussen.

2. Luftfahrzeug nach Anspruch 1, wobei die durch Schwingung beeinträchtige Zone (X) innerhalb von ungefähr 0 % und ungefähr 15 % der Länge des verlängerten Heckteils (40) liegt, gemessen von der Abströmkante des vertikalen Stabilisators (42).

3. Luftfahrzeug nach Anspruch 1 oder 2, wobei das Luftfahrzeug (10) ein Rad (90) beinhaltet, das an dem verlängerten Heckteil (40) montiert ist, und wobei sich die durch Schwingung beeinträchtige Zone (X) von der Abströmkante zu im Wesentlichen vertikal über dem Rad (90) erstreckt.

4. Luftfahrzeug nach Anspruch 3, wobei ein erster des einen oder der mehreren aktiven Schwingungssteuerungsaktoren (83, 122) an einer ersten Seite des verlängerten Heckteils (40) vertikal über dem Rad (90) montiert ist und ein zweiter des einen oder der mehreren aktiven Schwingungssteuerungsaktoren (84, 123) an einer zweiten gegenüberliegenden Seite des verlängerten Heckteils (40) vertikal über dem Rad (90) montiert ist.

5. Luftfahrzeug nach einem der Ansprüche 1 bis 4, wobei mindestens einer des einen oder der mehreren AVC-Aktoren (80, 120) an einem von dem vertikalen Stabilisator (42) und dem Stabilator (44) montiert ist.

6. Luftfahrzeug nach einem der Ansprüche 1 bis 5, ferner umfassend: einen an der Nabe montierten Schwingungsunterdrücker (HMVS - Hub Mounted Vibration Suppressor) (60), der an dem Rotorkopf (26) montiert ist, um ebenengleiche Belastungen, die der Rotor auf die Nabe ausübt, zu reduzieren.

7. Luftfahrzeug nach Anspruch 6, wobei der HMVS (60) eine Vielzahl von Nabenaktoren beinhaltet.

8. Luftfahrzeug nach Anspruch 7, ferner umfassend: eine Vielzahl von Sensoren (70) zum Bereitstellen einer Rückmeldung an die Vielzahl von Nabenaktoren und den einen oder die mehreren Schwingungssteuerungsaktoren (80).

9. Luftfahrzeug nach Anspruch 8, wobei jeder der Vielzahl von Sensoren (70) in einem Luftfahrzeugrumpf (12) der Luftfahrzeugzelle (14) montiert ist.

10. Luftfahrzeug nach Anspruch 8 oder 9, wobei es sich bei jedem der Vielzahl von Sensoren (70) um einen Beschleunigungsmesser handelt.

11. Luftfahrzeug nach einem der Ansprüche 8 bis 10, wobei der HMVS (60) HMVS-Sensoren beinhaltet, die unabhängig von der Vielzahl von Sensoren (70) einsatzfähig sind.

12. Luftfahrzeug nach einem der Ansprüche 6 bis 11, ferner umfassend:
eine Steuerung, die sowohl dem HMVS (60) als auch dem einen oder den mehreren AVC-Aktoren (80) koordinierte Steuerinformationen bereitstellt, um Schwingung zu reduzieren.

13. Luftfahrzeug nach Anspruch 12, wobei der HMVS (60) eine HMVS-Steuerung beinhaltet, die unabhängig von der Steuerung einsatzfähig ist.

## Revendications

1. Aéronef (10) comprenant :
une cellule (14) ;
un fuselage (12) supporté par la cellule (14) ;
une boîte de vitesses principale (28) ;
un rotor (16) comportant un moyeu (24) et une tête de rotor (26) ;
une queue en extension (40) qui commence à l'arrière d'une partie cabine de l'aéronef (10) où le fuselage (12) commence à se rétrécir et comporte un stabiliseur vertical (42) et un stabilisateur (44) ; et
un système de suppression des vibrations (54) **caractérisé par** :
un ou plusieurs actionneurs de contrôle des vibrations actif, AVC, (80, 120) montés dans la queue en extension (40) à l'intérieur d'une zone affectée par les vibrations (X), la zone affectée par les vibrations étant comprise entre environ 0 % et environ 20 % d'une longueur de la queue en extension (40) mesurée à partir d'un bord de fuite du stabiliseur vertical (42) vers l'avant, dans lequel le système de suppression des vibrations (54) est connecté fonctionnellement aux un ou plusieurs actionneurs AVC (80, 120) et configuré pour être actionné afin de réduire des charges vibratoires induites par le sillage produit par des pales de rotor en raison d'effets aérodynamiques et de surfaces d'impact de la queue en extension (40).

2. Aéronef selon la revendication 1, dans lequel la zone affectée par les vibrations (X) est comprise entre environ 0 % et environ 15 % de la longueur de la queue en extension (40) mesurée à partir du bord de fuite du stabiliseur vertical (42).

3. Aéronef selon la revendication 1 ou 2, dans lequel l'aéronef (10) comporte une roue (90) montée sur la queue en extension (40) et dans lequel la zone affectée par les vibrations (X) s'étend depuis le bord de fuite jusqu'à sensiblement verticalement au-dessus de la roue (90).

4. Aéronef selon la revendication 3, dans lequel un premier des un ou plusieurs actionneurs de contrôle des vibrations actif (83, 122) est monté sur un premier côté de la queue en extension (40) verticalement au-dessus de la roue (90) et un second des un ou plusieurs actionneurs de contrôle des vibrations actif (84, 123) est monté sur un second côté opposé de la queue en extension (40) verticalement au-dessus de la roue (90).

5. Aéronef selon l'une des revendications 1 à 4, dans lequel au moins l'un des un ou plusieurs actionneurs AVC (80, 120) est monté sur l'un du stabiliseur vertical (42) et du stabilisateur (44).

6. Aéronef selon l'une des revendications 1 à 5, comprenant en outre : un suppresseur de vibrations monté sur moyeu, HMVS, (60) monté sur la tête de rotor (26) pour réduire des charges dans le plan que le rotor exerce sur le moyeu.

7. Aéronef selon la revendication 6, dans lequel le HMVS (60) comporte une pluralité d'actionneurs de moyeu.

8. Aéronef selon la revendication 7, comprenant en outre : une pluralité de capteurs (70) pour fournir une rétroaction à la pluralité d'actionneurs de moyeu et aux un ou plusieurs actionneurs de contrôle des vibrations actif (80).

9. Aéronef selon la revendication 8, dans lequel chacun de la pluralité de capteurs (70) sont montés dans un fuselage (12) de la cellule (14).

10. Aéronef selon la revendication 8 ou 9, dans lequel chacun de la pluralité de capteurs (70) sont des accéléromètres.

11. Aéronef selon l'une des revendications 8 à 10, dans lequel le HMVS (60) comporte des capteurs HMVS fonctionnellement indépendants de la pluralité de capteurs (70) .

12. Aéronef selon l'une des revendications 6 à 11, comprenant en outre :
un contrôleur fournissant des informations de contrôle coordonnées à la fois au HMVS (60) et aux un ou plusieurs actionneurs AVC (80) pour réduire les vibrations.

13. Aéronef selon la revendication 12, dans lequel le HMVS (60) comporte un contrôleur HMVS fonctionnel indépendamment du contrôleur.
